# EUROPEAN PATENT SPECIFICATION

(11) **EP 2 344 598 B1**
(45) Date of publication and mention of the grant of the patent: **28.11.2012**
(21) Application number: 09778745.1
(22) Date of filing: 28.09.2009
(51) Int. Cl.: C09D 183/04, C09D 5/03, C08K 3/32, C08K 7/04, C08K 7/10

(54) **POWDER COATING COMPOSITION**
PULVERBESCHICHTUNGSZUSAMMENSETZUNG
COMPOSITION DE REVÊTEMENT EN POUDRE

(30) Priority: 26.09.2008 GB 0817589
(43) Date of publication of application: 20.07.2011
(73) Proprietor: University Of Ulster, County Londonderry BT52 1SA (GB)
(72) Inventor: TEPE, Bulent, County Antrim BT37 0RU (GB)
(74) Representative: O'Neill, Brian
(86) International application number: PCT/EP2009/006973
(87) International publication number: WO 2010/034517

(56) References cited:
- EP-A- 0 950 695
- EP-A- 1 038 846
- WO-A-03/002645
- WO-A-2004/076572
- WO-A-2009/003937
- SU-A1- 1 782 984
- US-A1- 2006 283 352

## Description

The present invention is concerned with a powder coating composition, and in particular a corrosion protection enhanced high temperature resistant powder coating which, when exposed to high temperature, withstands adhesion failure or cracking, often called mud cracking, which is due to a mismatch in thermal coefficients between the coating and the substrate.

### Background of the Invention

Many surface finishing industries are seeking alternative coatings which have less or no volatile organic compounds (VOC), in particular due to tightening legislation. As an example, steel is used for broad purposes in the engineering industry. Steel, as most of the metals employed in service life, is subject to deterioration either by corrosion at room temperature or by oxidation at high temperature. To prevent oxidation, chemical reaction and erosion of steel at high temperatures, protective coatings are often applied. Steel is used for silencers and mufflers which have an operating temperature of up to 550 °C. To provide reliability to the silencers and mufflers at high operating temperature, a heat resistant coating is required, mainly achieved by applying wet paint. However, concerns over increasingly stringent environmental and health and safety legislation regarding VOC level require manufacturers to investigate alternative low or no VOC high temperature coating systems. Powder coating is often selected due to its VOC free content. Powder coating provides a reliable barrier coating for substrates such as aluminium, steel and alloys. It also provides UV protection, abrasion resistance and corrosion resistance. Most of the powder coatings, which require high temperature resistance are silicone based. It is known that coatings or paints incorporating silicone resins have high heat resistance. The silicone resin skeleton formed of a siloxane bond (-O-Si-O-), can maintain its binder characteristics after heating.

A drawback of powder coating for high temperature applications is coating delimitation due to the expansion and retraction effect, known as mismatch thermal coefficient between substrate and coating. In high temperature applications it is often noted that cracking and flaking of the coating leads coated components to corrode due to loss of corrosion barrier properties. This is a particular problem when adding any types of corrosion inhibiting filler to a powder coating composition to enhance corrosion protection, which increases flaking and cracking of the coatings.

WO2004/076572 discloses a thermosetting, heat-resistant, silicon based powder coating composition is provided for use on substrates likely to be subjected to high temperatures above 550 DEG C. The powder coating composition contains low melting glass particles, which soften and flow at temperatures in the range which the organic components of the coating burn away.

EP0950695 discloses a coating powder for providing a high temperature resistance coating has a silicone resin binder system which is either substantially all silicone resin or an -OH - functional silicone resin adduct plus blocked, multi -NCO functional curative.

It is therefore an object of the present invention to provide an enhanced corrosion protection powder coating composition with improved high temperature performance.

### Summary of the Invention

According to the present invention there is provided a powder coating composition comprising polysiloxane resin; a corrosion inhibitor; and reinforcing fibres comprising basalt.

Preferably, the reinforcing fibres have a density of between 1 and 4 g/cm² more preferably between 2 and 3 g/cm² and most preferably 2.7 g/cm².

Preferably, the corrosion inhibitor comprises strontium aluminium polyphosphate hydrate.

Preferably, the powder coating composition comprises at least one filler.

Preferably, the powder coating composition comprises between 1% and 70% polysiloxane resin, more preferably between 40% and 65% polysiloxane resin, and most preferably between 50% and 60% polysiloxane resin.

Preferably, the at least one filler comprises a calcium inosilicate mineral.

Preferably, the at least one filler comprises wollastonite.

Preferably, the at least one filler comprises mica.

Preferably, the powder coating composition comprises pigment.

Preferably, the pigment comprises high temperature resistant cobalt black.

Preferably, the powder coating composition comprises a flow control agent.

As used herein, the term "mineral fibre" is intended to mean a fibrous material made from glass, rock, alumina, silica, ceramic, etc, and may be composed of a mixture of fibres in a range of sizes.

### Brief description of the drawings

Figure 1 illustrates a graph showing the Elastic Modulus of a number of sample coatings according to the present invention;
Figure 2 illustrates a Nyquist (Z' Ωcm² vs. Z" Ωcm²) magnitude plot for example 1 test panel before heat exposure;
Figure 3 illustrates a Bode (Frequency Hz. vs. |Z| Ωcm²) magnitude plot for example 1 test panel before heat exposure;
Figure 4 illustrates the coating resistance of prepared powder coated samples before heat exposure during 20 days of immersion in 3.5 % NaCl electrolyte;
Figure 5 illustrates the coating resistance of prepared powder coated samples after heat exposure during 20 days of immersion in 3.5 % NaCl electrolyte;
Figure 6 illustrates a thermogravimetric analysis (TGA) for reinforcing fibres in the powder coating composition of the invention;
Figure 7 illustrates a thermogravimetric analysis (TGA) for components of the powder coating composition of the invention;
Figure 8(a), (b) and (c) illustrate scanning electron microscope (SEM) images of coated test panels before heat exposure; and
Figure 9(a), (b) and (c) illustrate SEM images of coated test panels after heat exposure.

### Detailed Description of the Invention

Polysiloxanes based powder coatings are well known in the art, and are often referred to as silicones, polysiloxanes or polysiloxane polymers. As used throughout the specification, the term "polysiloxane" is intended to mean polymerised siloxanes, being mixed organic-inorganic polymers having a chemical formula [R₂SiO]ₙ, where R = organic groups such as methyl, ethyl, and phenyl. In the manufacture of powder coating compositions, polysiloxanes are generally mixed with a number of additional components such as fillers, corrosion inhibitors, pigments, etc., in an attempt to improve the performance of composition, for example the heat resistance, flowability, etc., of the finished powder coating. Silicone has many useful properties, a large number of which make it a excellent material for use in powder coating compositions. These properties include thermal stability over a relatively wide range of temperatures; an ability to repel water and form a watertight seal; resistance to oxygen; good flexibility; non-stick properties; low levels of toxicity and a low chemical reactivity.

One common additive to polysiloxane powder coating compositions is a corrosion inhibitor, in order to improve the real world performance of the finished powder coating as applied to a substrate. However, it is found that if a corrosion inhibitor is used as part of the powder coating composition, which is then subjected to high temperatures, the inclusion of the corrosion inhibitor can result in cracking on the coating after said heat exposure. As powder coating may be used in a large number of high temperature applications, for example vehicle exhaust systems, mufflers, silencers, furnaces, burners, domestic appliances such as ovens, barbeque grills, etc, it is therefore desirable to avoid the above mentioned cracking. According to the present invention, it has surprisingly been found that the addition of fibre reinforcement to the powder coating composition results in a finished coating which is resistant to cracking when exposed to high temperatures, for example in the region of 550°C. The reinforcing fibres comprise basalt. The fibres are specifically milled and processed to control length and diameter. The fibres are preferably between 50 and 120 microns in length, and preferably between 4 and 9 microns in diameter.

The corrosion inhibitors used in the powder coating composition may be strontium aluminium polyphosphate hydrate which contains SrO, P₂O₅ Al₂O₃ or zinc powder and others.

The powder coating composition of the present invention may also include one or more fillers and/or additives, in order to provide the powder coating composition with the desired properties. The filler/additives may, for example, include reinforcing fillers, pigments, flow additives, adhesion promoters, curing agents, surfactants, agents to improve the dry flow properties of the powder, degassings agents, and any other additives suitable for use with the powder coating composition. In a preferred embodiment, the powder coating composition comprises fillers of mica and calcium silicate such as wollastonite. Mica can be given the general chemical formula:

X₂Y₄₋₆Z₈O₂₀(OH,F)₄

in which X is K, Na, or Ca
Y is Al, Mg or Fe
Z is Si or Al

Calcium silicate is a compound obtained by reacting calcium oxide and silica in different ratios, and can take one of four forms, having the chemical compositions Ca_{3O}.SiO₄, Ca₂SiO₄ Ca₃Si₂O₇ and CaSiO₃.

The composition of the invention also preferably comprises pigment, for example high temperature resistant cobalt black, in addition to a flow control agent, for example Resiflow™_{.}

To prevent caking of the powder, and ensure smoothness of the milling process, flow additive is needed. For this purpose aluminum oxide, in the form of ultrafine particles, is added to the above formulation. The primary particles of the ultrafine particles of the aluminum oxide having an average diameter of 0.1 µm or less, preferably 0.005 to 0.05 µm, which are used in the extruded products. Aluminum oxide in the form of ultrafine particles, for example Aluminum Oxide C (trade name, manufactured by Degussa Co.) can be used.

The table below lists the supplier and trade name of the components used in the powder coating composition:

| **Components** | **Supplier/ Manufacturer** | **Trade Name** |
|---|---|---|
| Silicone Resin | Wacker Chemie | Silres 604 |
| Flow Agent | Worlee | Resiflow PL 200 |
| Degassing Agent | Various suppliers | Benzoin |
| Filler (Mica) | Mearlin, | Magna-Pearl 1000 |
| Filler Wollastonite | Nordkalk Corporation | Wollastonite, Nyad FW325 |
| Black Pigment | Ferro | Cobalt Black Ferro F6331-2 |
| Anti-corrosion Filler | Heubach | Heucophos ZCP+ Heucophos SAPP |
| Glass Fibre | Fibertec | Microglass 3082 |
| Mineral Fibre | Fibertec or Lapinus | Mineral Wool CoatForce CF10 |
| Flow Additive | Degussa | Aluminium Oxide C |

### EXAMPLES

In order to prepare the powder coating the components in the powder paint formulations were homogonously pre-mixed for 3 minutes using a ball mixer. Table 1 shows pre-mixing components in the formulation. Details of the components used in the formulations are described above. The mixture was extruded through a twin-screw extruder. During extrusion a back zone temperature of 50 °C, front zone temperature 90 °C, 200 rpm screw speed and 40 % torque was selected. The extruded product was milled to a powder form using a high-speed mill and sieved to approximately 100 µm particles. During the milling process 1% Aluminum Oxide is added to the extruded products. The reinforcing fibre may optionally be excluded from the mixture prior to the extruding stage, and can be added to the composition after extrusion, and mixed through and dispersed into the powder during the final milling stage.

The powder coating composition may be applied to any desired substrate, and using electrostatic spraying or any other suitable means of application. In the examples given here, hot rolled steel was used as the substrate. Prior to the coating application the substrate surface was grit blasted to achieve further mechanical anchoring adhesion between coating and substrate. Applied coatings are examined before and after heat treatment at 550°C. Coating deposition was examined by using a scanning electron microscope (SEM). Mechanical properties of the coatings were measured by using tensile testing techniques. Corrosion study was performed by using electrochemical impedance spectroscopy (EIS) and salt spray test (ASTM B117). Various adhesion tests were also performed such as cross hatch test, and conical mandrel test.

The prepared powder coating was applied on the test panels using an electrostatic spray gun. The test panels were cured at 230 °C for 30 minutes. The coating thickness measured approximately 40-60 µm. Following powder coating some of the panels were tested according to ASTM 5402 for curing; the MEK solvent rub test was used. To enhance the properties of the coating; fibres were used in the formulations; glass and engineered mineral fibres. The fibres in the coatings were E glass fibres, approximately 150 µm in length and engineered mineral based fibre, approximately 125 µm in length. 5% and 10% (wt) of each fibre was used in the formulation. The glass fibre was used in the examples for correlation purposes. Example 5 was used as a reference formulation without any fibres.

**Table 1 Comparative Powder Coating Preparation**

| **Components** | **Example 1 (g)** | **Example 2 (g)** | **Example 3 (g)** | **Example 4 (g)** | **Example 5 (g)** |
|---|---|---|---|---|---|
| Silicone Resin | 500 | 500 | 500 | 500 | 500 |
| Flow Agent | 7.5 | 7.5 | 7.5 | 7.5 | 7.5 |
| Degassing Agent | 2.5 | 2.5 | 2.5 | 2.5 | 2.5 |
| Wollastonite | 40 | 40 | 40 | 40 | 40 |
| Mica | 200 | 200 | 200 | 200 | 200 |
| Black Pigment | 20 | 20 | 20 | 20 | 20 |
| Anti-corrosion Filler | 40 | 40 | 40 | 40 | 40 |
| Glass Fibre | 5% | 10% | -- | -- | -- |
| Mineral Fibre by weight | -- | -- | 5% | 10% | -- |
| Aluminium Oxide (During Milling) by weight | 1% | 1% | 1% | 1% | 1% |

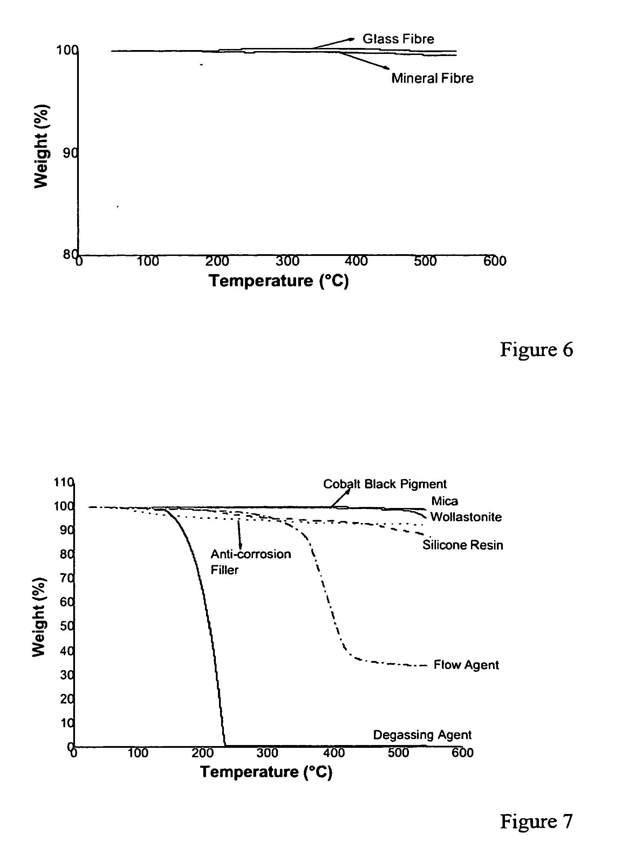

Prior to selecting components used in the powder coating formulation, Thermo Gravimetric Analysis (TGA) was conducted to study the thermal behaviour of the components. To evaluate the powder coating performance various tests were applied to the test panels, the results of which are shown in Figures 6 and 7. Some of the test panels were exposed to heat according to Table 2 ASTM 2485. The coated test panels were exposed to high temperature following ASTM 2485 method B. The coated test panels were placed in a muffle furnace where the temperature was maintained at 205 °C for 8 hours, then increased to 260 °C for 16 hours. The temperature was increased in 55 °C increments up to 550 °C. Table 2 shows the high temperature test schedule as explained in ASTM 2485, method B.

**Table 2 Heat Exposure Test Schedules of Coated Panels ASTM 2485**

| | | | | | | | | |
|---|---|---|---|---|---|---|---|---|
| **Temperature (°C)** | 205 | 260 | 315 | 370 | 425 | 480 | 535 | 550 |
| **Duration (hours)** | 8 | 16 | 8 | 16 | 8 | 16 | 8 | 16 |

A number of tests were conducted on the test panels, with and without heat exposed test panels included: salt spray test, adhesion test, mechanical properties (tensile test), Electrochemical Impedance Spectroscopy (EIS) study and Scanning Electron Microscopy (SEM), surface analysis study. Neutral salt spray testing was conducted according to ASTM B117. Salt spray testing was conducted for all test samples for up to 400 hours. Every 100 hours test panels were checked and creepage from scribe was recorded. If creepage on any of the panels was over 5 mm from the scribe, testing for those panels was ended and reported as a failure before the end of the test period. Adhesion testing was conducted according to ASTM D3359 tape test and ASTM D522 conical mandrel test. For tape testing, cross-cut technique was used as stated on ASTM 3359 method B. A 1 mm spacing cross hatch cutter with 6 cutting edges was used for this test. Test panels for a conical mandrel test were 0.8 mm thickness cold rolled steel Q panel (grit blasted prior to coating application). This is stated in ASTM D522 standard. Then a powder coated hot rolled steel (HRS) sheet was bent over a conical mandrel and the coating observed for cracks and discolouration. Electrochemical Impedance Spectroscopy (EIS) was conducted on each differently prepared coating (Table 1) test panels. A cylindrical acrylic tube was fixed on the test panels. The geometrical area for impedance measurements was 10 cm² and 3.5 % wt. NaCl electrolyte was used. A three electrodes electrochemical cell was formed with a platinum mesh counter electrode (CE), the working electrode was attached (WE) on a differently prepared coating test panel. The potentials were measured and referred (RE) to a (SCE), saturated calomel reference electrode. All EIS studies were performed using a Solartron 1260 frequency response analyser, Solartron 1287 potentiostat and a PC. Impedance data was collected at frequencies range 10⁴ Hz to 10⁻¹ Hz. The experimental impedance was interpreted in ZPlot electrochemical impedance software.

The components used in the formulation were evaluated for thermal stability using TGA (see figure 7). TGA study was used for components selection in the formulation; it was aimed at using components which have a good thermal stability. It is known that if any components in the final product are not thermally stable, coating failure at high temperatures would occur. A few milligrams of each sample were used for TGA study. The samples were heated from room temperature to 550°C using 10°C/min ramp rate in nitrogen atmosphere. In the components selection process TGA played a significant role. Many types of filler and additives intended to be used for the formulation did not show good thermal stability. Those components which did not show good thermal stability were taken out of the formulation or replaced with the new components, which give better thermal stability. Components used in the final formulation are shown in Table 1.

The TGA study showed that fibres used in the study were thermally stable (see figure 6). However, one of the main components, silicon resin, lost approximately 15% of its weight. Many types of polysilicone available commercially were investigated. The one with the best performance was chosen to use in the formulation. Also, degassing agent completely disappeared above 200 °C, flow agent showed a great reduction in weight after 400 °C. Degassing agent and flow agent were not main components for the powder coating. They had a small percentage in the formulation, and therefore no significant impact for thermal stability of the final coating in this study. Alternatively, black pigment and anti-corrosion filler had very good thermal stability up to 550 °C.

After the TGA study, the final formulations were prepared and applied on the grit blasted hot rolled steel test panels. Table 3 shows the coatings and characteristics of the sample powder coatings applied on the substrate and heat exposed explained in ASTM 2485. The colour of the coating was checked using a colour matching chart to grey in colour. It was found that the colour of the coated samples were RAL 7015. However, the colour can be modified by changing the ratio of the pigment used in the formulation. The Example 3 coating surface was very smooth compared to other samples (except Example 5); this is due to low fibre content and good flow of the coating during curing process. Other sample surfaces were rough due to high fibre content, in addition Example 1 had low glass fibre content, but the surface was not as smooth as Example 3. This could be attributed to the length of the glass fibres, which are longer than mineral fibres.

**Table 3 Characteristics of Coatings**

| | Example 1 | Example 2 | Example 3 | Example 4 | Example 5 |
|---|---|---|---|---|---|
| Texture Appearance Before Heat Exposure | Rough Surface | Very Rough Surface | Smooth Surface | Rough Surface | Smooth Surface |
| Texture Appearance | Rough Surface | Very Rough Surface | Smooth Surface | Rough Surface | Smooth Surface |
| After Heat Exposure | Dusty | Dusty | | | |
| Discolouration After Heat Exposure | Slight | Slight | Slight | Slight | Slight |
| MEK Rub Test | Pass | Pass | Pass | Pass | Pass |

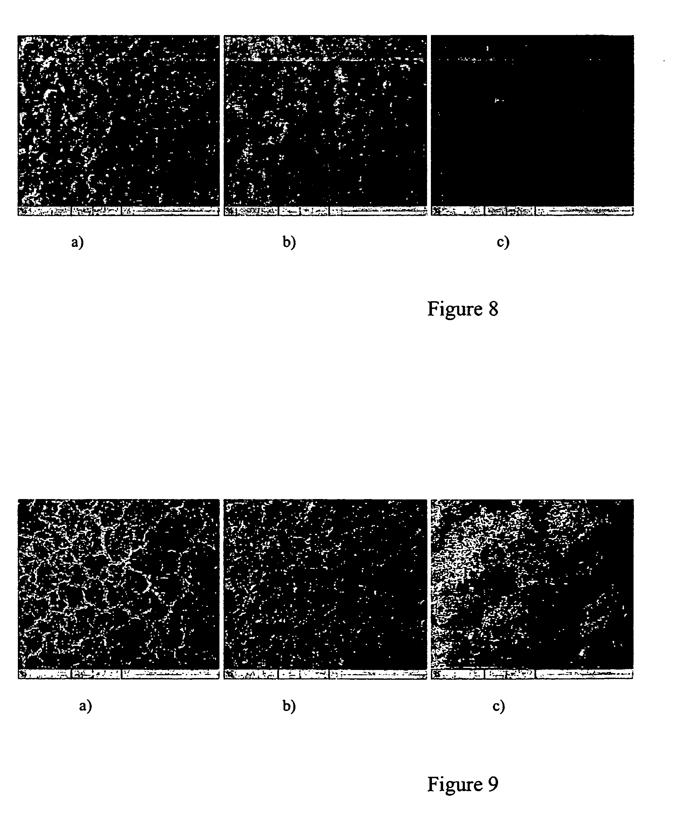

Further surface morphology tests were carried out by using SEM. Figure 8 shows SEM images of coated test panels before heat exposure, with Figure 8(a) showing example 1, Figure 8(b) showing example 3 and Figure 8(c) showing example 5. Figure 9 shows SEM images of the coated test panels after heat exposure, with Figure 8(a) showing example 1, Figure 8(b) showing example 3 and Figure 8(c) showing example 5. Prior to SEM study a conductive path was created by using sputtering gold plasma. It was calculated to have few nanometers of gold on the surface. The SEM study showed that Example 1 and 2 have a very rough surface due to glass fibres present on the surface. Example 3 and 4 also had a rough surface compare to Example 5, which had no fibres in the formulation.

The coating in Example 5 on the substrate flaked-off. This was attributed to no fibres in the coating resulting in delamination. Example 1 and 2 displayed some mud cracking on the surface. However, Example 3 and 4 coatings showed minimal crazing, on the surface, that did not permeate through the coating.

Adhesion test results are shown in Table 4. Two test samples were used in each test. Average test results were taken into consideration. The adhesion tests were applied before and after heat exposure. Cross hatch and conical mandrel test results indicated that for all examples adhesions were acceptable before heat exposure. However, test results show that after heat exposure adhesion of the coating reduces or fails. In particular in Example 5, test samples showed that after heat exposure the coating adhesion totally fails. The SEM study of Example 5 also showed that the coating was lifted from the substrate surface. The best adhesion results were recorded with Example 3 and 4. It was noted that Example 3 showed outstanding adhesion properties before and after heat exposure.

**Table 4 Adhesion Test Results**

| Example No. | Cross Hatch Test | | Conical Mandrel Test | |
|---|---|---|---|---|
| | Classification | | Cracks Distance from Small End of Cone (mm) | |
| | Before Heat | After Heat | Before Heat | After Heat |
| 1 | 4B | 3B | 16 | 25 |
| 2 | 3B | 2B | 22 | 35 |
| 3 | 4B | 4B | 12 | 22 |
| 4 | 4B | 3B | 20 | 24 |
| 5 | 4B | 1B | 25 | Flaked-off |

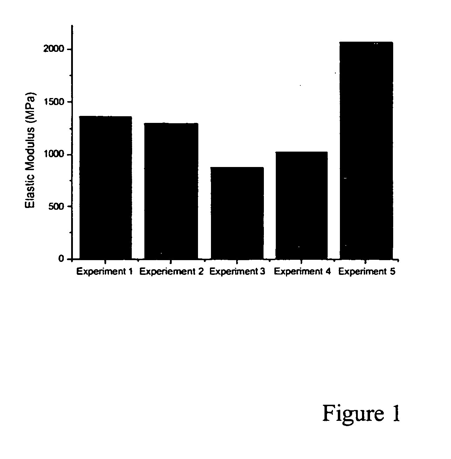

To evaluate mechanical properties of the coatings; differently prepared coatings according to Table 1 were electrostatically applied on the PTFE sheet and cured. After curing, coatings were peeled-off from PTFE sheet for tensile test. Tensile tests were carried out on the 3 test samples cut into 20 mm width and 80 mm length. The coating thickness was approximately 120 µm after curing. It was applied thicker than the normal application to steel substrate to create testable samples. The test was conducted on 0.5 mm/min head movement of tensile test machine. The elastic modulus calculated is shown in Figure 1. It was found that elastic modulus for Example 3 and Example 4 coatings is lower than other coatings. This is due to mineral fibre in the composition of those coatings. Example 5 had the highest tensile modulus, which was expected due to the fibre free composition.

Salt spray tests were performed using Q-FOG™ CCT 600 neutral salt fog cyclic corrosion tester, fallowed ASTM B117 standard. Results after 400 hours are shown in Table 5. The progress of corrosion on coated test samples was evaluated after the salt spray test. Two of the test samples for each example were used. The average creepage form scribe is shown in Table 5. The test results showed that Example 2 and 3 test panels were predominant to others. Example 1 and 2 and test panels performed well up to 300 salt spray hours but in Example 2 test panel results were very poor at 400 hours. In Example 2 only test panels before heat exposure showed poor salt spray performance at 400 salt spray hours, due to a high fibre content creating a conductive path. Example 5 had the poorest result for after heat exposed test panels; this was due to flaking of the coating.

**Table 5 Salt Spray Results**

| **Example No.** | **Creepage from Scribe after Salt Spray (mm)** | | | | | | | |
|---|---|---|---|---|---|---|---|---|
| | **100 hours** | | **200 hours** | | **300 hours** | | **400 hours** | |
| | Heat Exposure ASTM 2485 | | Heat Exposure ASTM 2485 | | Heat Exposure ASTM 2485 | | Heat Exposure ASTM 2485 | |
| | Before | After | Before | After | Before | After | Before | After |
| **1** | 1 | 1 | 1.5 | 2 | 2.5 | 4 | 4 | 5 |
| **2** | 1 | 1 | 2 | 2.5 | 3 | 4.5 | Failure | Failure |
| **3** | 1 | 1 | 1.5 | 2 | 2 | 3 | 2.5 | 4 |
| **4** | 1 | 1 | 1.5 | 2 | 2 | 4 | 5 | 5 |
| **5** | 1 | 2 | 1.5 | 5 | 3 | Failure | 5 | Failure |

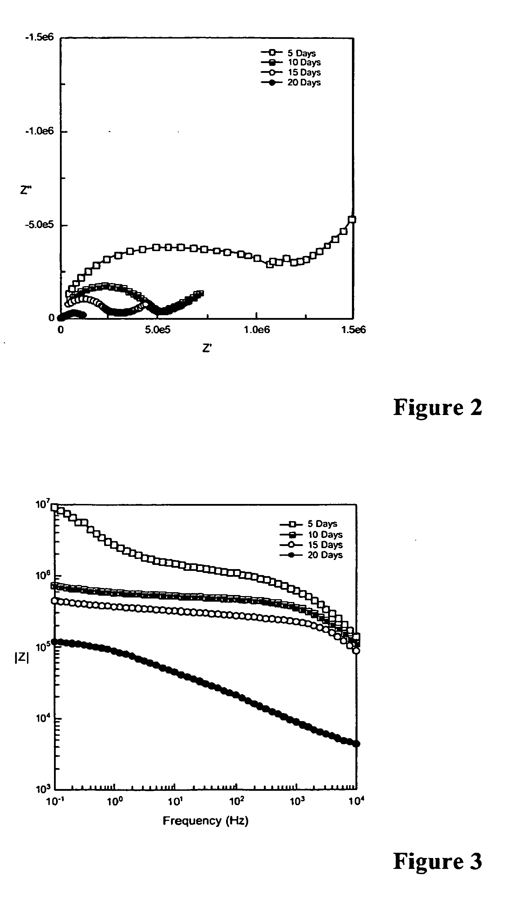

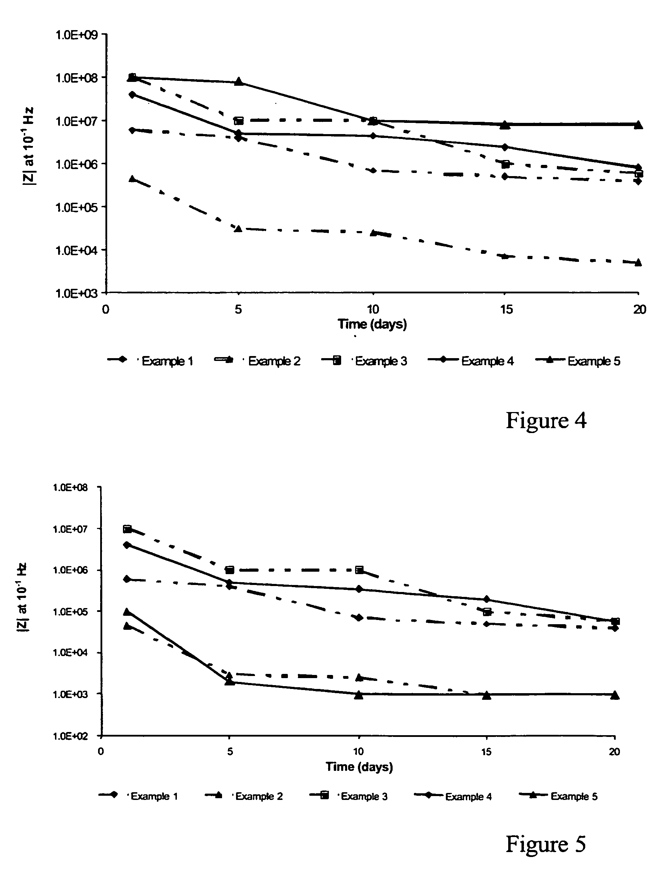

Differently prepared test samples (Table 1) were immersed in 3.5 % wt. NaCl electrolyte up to 20 days, and data was collected from electrochemical impedance measurements, for each powder coating system before and after heat exposure, exemplary Nyquist and bode plots shown in the Figures 2 and 3. The test was performed in 5 day intervals. The Bode plots display absolute value of the impedance (|Z|), which was plotted versus the frequency (Hz.). The total impedance of test panels defined as |Z| value, extrapolated to 10⁻¹ Hz in the Bode magnitude plots, which were used as comparison of each coating system. Figure 4 shows impedance |Z| at 10⁻¹ Hz for test panes before heat exposure and Figure 5 shows impedance |Z| at 10⁻¹ Hz for test panels after heat exposure.

It was noted that test panels before heat exposures showed high impedance in day 1. This was due to coating resistance to permeability. In day 5 it displayed reduced readings of total impedance. However, Example 2 test panels showed low impedance readings from Day 1 to 20, this can be attributed to high fibre content which allows electrolyte solution to penetrate through coatings. Example 5 showed a very good coating resistance start with |Z| 10⁸ at 10⁻¹ Hz and in Day 20 it was still showing high impedance |Z| 10⁷ at 10⁻¹ Hz. Also, impedance for Example 3 and Example 4 showed acceptable corrosion resistance. The coated test panels after high temperature exposure showed different EIS results than ones before exposed to the high temperature. Most significant was Example 5, when the test panels after heat exposure showed very poor impedance from day 1 and in day 10, there was no recoating resistance other than electrolyte and equipment resistance. Rust spots were noted on the test samples. The correlation between salt spray test and EIS test for Example 5 was very similar. The coating without any fibre showed poor corrosion resistance after exposure to high temperature. The Example 2 samples also displayed poor readings, as rapid degradation over the duration of the test was recorded. The EIS results for Example 3 and 4 were also worse than test samples, which were not exposed to high temperature.

From the above described experiments there was clear evidence that using fibres in the coating enhances the coating resistance to high temperature of up to 550°C. It was beneficial to use the TGA study prior to preparing high temperature resistant coatings. Also SEM study showed that coatings without any fibres had surface degradation such as flaking or cracking of the coating after exposure to high temperature due to the mismatch thermal coefficient. However the coatings which have fibres in the composition displayed good adhesion and enhanced high temperature resistance. It was shown that the engineered mineral fibre in this study was a clearly dominant component to glass fibre. The adhesion, salt spray and EIS studies correlated that coating without fibre exhibited good adhesion and corrosion properties before exposure to heat. However, SEM study showed that after high temperature exposure of coating without any fibres flaking off from surface occurred. From this study it can be concluded that using mineral fibres in powder coating, which requires heat resistance is advantageous. It was particularly noted that the coating, which had 5% mineral fibres in the formulation, was dominant to other types.

In the composition of the present invention, the fibre reinforcing of the coating increases the tensile strength of the coating. In addition, the fibre reinforcing increases the tensile strain, which affects the flexibility of the coating, otherwise known as the elastic modulus. The elastic modulus represents the relative stiffness of the coating, and is the ratio of stress to strain. The fibre reinforcing provides improvements in tensile modulus, elongation and tensile strength, allowing the reinforced powder coating to resist the above described cracking at elevated temperatures.

It will be appreciated that the quantities given in the above examples may be considerably varied while retaining the beneficial properties of the invention arising from the fibre reinforcing of the composition.

## Claims

1. A powder coating composition comprising polysiloxane resin; a corrosion inhibitor; and reinforcing fibres comprising basalt.

2. A powder coating composition according to claim 1 in which the reinforcing fibres have a density of between 1 and 4 g/cm2 more preferably between 2 and 3 g/cm2 and most preferably 2.7 g/cm2.

3. A powder coating composition according to any preceding claim in which the corrosion inhibitor comprises strontium aluminium polyphosphate hydrate.

4. A powder coating composition according to any preceding claim comprising at least one filler.

5. A powder coating composition according to any preceding claim comprising between 1% and 70% polysiloxane resin, more preferably between 40% and 65% polysiloxane resin, and most preferably between 50% and 60% polysiloxane resin.

6. A powder coating composition according to claim 4 or 5 in which the at least one filler comprises a calcium inosilicate mineral.

7. A powder coating composition according to any of claims 4 to 6 in which the at least one filler comprises wollastonite.

8. A powder coating composition according to any of claims 4 to 7 in which the at least one filler comprises mica.

9. A powder coating composition according to any preceding claim comprising pigment.

10. A powder coating composition according to claim 9 in which the pigment comprises high temperature resistant cobalt black.

11. A powder coating composition according to any preceding claim comprising a flow control agent.

## Patentansprüche

1. Pulverbeschichtungszusammensetzung, die Polysiloxanharz, einen Korrosionsinhibitor und Verstärkungsfasern, die Basalt umfassen, umfasst.

2. Pulverbeschichtungszusammensetzung nach Anspruch 1, in der die Verstärkungsfasern ein Dichte von zwischen 1 und 4 g/cm2, bevorzugter zwischen 2 und 3 g/cm2 und am bevorzugtesten 2,7 g/cm2 aufweisen.

3. Pulverbeschichtungszusammensetzung nach einem vorstehenden Anspruch, in der der Korrosionsinhibitor Strontium-Aluminium-Polyphosphat-Hydrat umfasst.

4. Pulverbeschichtungszusammensetzung nach einem vorstehenden Anspruch, die mindestens einen Füllstoff umfasst.

5. Pulverbeschichtungszusammensetzung nach einem vorstehenden Anspruch, die zwischen 1 % und 70 % Polysiloxanharz, bevorzugter zwischen 40 % und 65 % Polysiloxanharz und am bevorzugtesten zwischen 50 % und 60 % Polysiloxanharz umfasst.

6. Pulverbeschichtungszusammensetzung nach Anspruch 4 oder 5, in der der mindestens eine Füllstoff ein Calcium-Inosilikat-Mineral umfasst.

7. Pulverbeschichtungszusammensetzung nach einem der Ansprüche 4 bis 6, in der der mindestens eine Füllstoff Wollastonit umfasst.

8. Pulverbeschichtungszusammensetzung nach einem der Ansprüche 4 bis 7, in der der mindestens eine Füllstoff Mica umfasst.

9. Pulverbeschichtungszusammensetzung nach einem vorstehenden Anspruch, die Pigment umfasst.

10. Pulverbeschichtungszusammensetzung nach Anspruch 9, in der das Pigment hochtemperaturbeständiges Cobaltschwarz umfasst.

11. Pulverbeschichtungszusammensetzung nach einem vorstehenden Anspruch, die ein Verlaufmittel umfasst.

## Revendications

1. Composition de revêtement par pulvérisation comprenant une résine polysiloxane ; un anti-rouille ; et des fibres de renforcement comprenant du basalte.

2. Composition de revêtement par pulvérisation selon la revendication 1, dans laquelle les fibres de renforcement ont une densité entre 1 et 4 g/cm², de préférence entre 2 et 3 g/cm² et idéalement de 2,7 g/cm².

3. Composition de revêtement par pulvérisation selon l'une quelconque des revendications précédentes, dans laquelle l'anti-rouille comprend un hydrate de polyphosphate d'aluminium strontium.

4. Composition de revêtement par pulvérisation selon l'une quelconque des revendications précédentes, comprenant au moins une charge.

5. Composition de revêtement par pulvérisation selon l'une quelconque des revendications précédentes, comprenant entre 1% et 70% de résine polysiloxane, de préférence entre 40% et 65% de résine polysiloxane et idéalement entre 50% et 60% de résine polysiloxane.

6. Composition de revêtement par pulvérisation selon la revendication 4 ou 5, dans laquelle l'au moins une charge comprend un minéral inosilicate de calcium.

7. Composition de revêtement par pulvérisation selon l'une quelconque des revendications 4 à 6, dans laquelle l'au moins une charge comprend de la wollastonite.

8. Composition de revêtement par pulvérisation selon l'une quelconque des revendications 4 à 7, dans laquelle l'au moins une charge comprend du mica.

9. Composition de revêtement par pulvérisation selon l'une quelconque des revendications précédentes, comprenant un pigment.

10. Composition de revêtement par pulvérisation selon la revendication 9, dans laquelle le pigment comprend du noir de cobalt résistant à haute température.

11. Composition de revêtement par pulvérisation selon l'une quelconque des revendications précédentes, comprenant un agent de régulation de flux.
